# EUROPÄISCHE PATENTANMELDUNG

(11) **EP 1 143 184 A1**
(43) Veröffentlichungstag der Anmeldung: **10.10.2001**
(21) Anmeldenummer: 01810250.9
(22) Anmeldetag: 12.03.2001
(51) Int. Cl.: F16L 21/06, F16L 55/10

(54) **Spannschelle zum flüssigkeits- oder gasdichten und axialen Verbinden von zwei Rohren**

(30) Priorität: 03.04.2000 CH 653002000
(71) Anmelder: GEBERIT TECHNIK AG, 8645 Jona (CH)
(72) Erfinder: Häsler, Heinz, 8645 Jona (CH)
(74) Vertreter: Groner, Manfred

(57) **Zusammenfassung**

Die Spannschelle zum flüssigkeits- oder gasdichten und axialen Verbinden von zwei Rohren (7, 8) ist mit einem Dichtungsmittel (12b) versehen, das an der Innenseite des Gehäuses (2, 11) angeordnet ist und an die zu verbindenden Rohre (7, 8) anzulegen ist. Ein Brandschutzmittel (12a) ist innerhalb des Gehäuses (2, 11) angeordnet und soll im Brandfall eine Undichtigkeit der Verbindung verhindern. Das Brandschutzmittel (12a) ist in einer Dichtung (6, 12, 13) integriert und ist vorzugsweise intumeszierendes Material. Vorzugsweise ist das intumeszierende Material in die Dichtung einextrudiert.

## Beschreibung

Die Erfindung betrifft eine Spannschelle zum flüssigkeits- oder gasdichten und axialen Verbinden von zwei Rohren, mit einem Gehäuse, einem Spannmittel zum Spannen des Gehäuses, mit einem Dichtungsmittel, das an der Innenseite des Gehäuses angeordnet ist und an die zu verbindenden Rohre anzulegen ist und mit einem Brandschutzmittel, das innerhalb des Gehäuses angeordnet ist und im Brandfall eine Undichtigkeit der Verbindung verhindern soll. Die Rohre sind insbesondere Lüftungsrohre.

Spannschellen zum Verbinden von Rohren insbesondere Leitungsrohren sind allgemein bekannt. Diese weisen ein Gehäuse aus Blech auf, das um die Enden der zu verbindenden Rohre zu legen ist und das beispielsweise mit einer Spannschraube gespannt wird. Innerhalb des Gehäuses befindet sich ein Gummiband, das beim Spannen des Gehäuses an die Aussenseiten der Rohrenden angepresst wird.

Es gibt nun Anwendungen, bei denen diese Spannschellen Brandschutzmittel aufweisen, mit denen eine Undichtigkeit im Brandfall verhindert werden soll. Ein einfaches Brandschutzmittel besteht aus einer thermisch isolierenden und brandresistenten Hülle, welche aussenseitig um die Spannschelle gelegt wird. Diese wärmeisolierende Hülle soll verhindern, dass das Dichtungsmittel erwärmt wird und schmilzt. Bei der Spannschelle gemäss der WO 97/45670 ist ein thermisch isolierendes und feuerresistentes Band zwischen ein inneres und äusseres Metallgehäuse eingelegt.

Diese Band soll ebenfalls verhindern, dass das Dichtungsmaterial, das auf der Innenseite des inneren Gehäuses angeordnet ist, stark erwärmt wird und damit eine Dichtungsfunktion nicht mehr übernehmen kann. Eine Spannschelle mit zwei Gehäusen ist jedoch aufwendig und in der Herstellung teuer. Zudem ist ihr Gewicht vergleichsweise hoch.

Der Erfindung liegt die Aufgabe zugrunde, eine Spannschelle der genannten Art zu schaffen, die einfacher und kostengünstiger herstellbar ist und die dennoch im Brandfall dicht ist. Die Aufgabe ist gemäss Anspruch 1 dadurch gelöst, dass das Brandschutzmittel in einer Dichtung intergriert ist. Bei der erfindungsgemässen Spannschelle ist die Dichtung gleichzeitig das Brandschutzmittel. Eine solche Spannschelle kann mit wenigen Teilen und einem einfachen Gehäuse aus Blech hergestellt werden. Da das Dichtungsmittel und das Brandschutzmittel eine Einheit bilden, ist die erfindungsgemässe Spannschelle ebenso einfach im Aufbau wie eine Spannschelle ohne Brandschutzmittel.

Ein besonders hoher Brandschutz bei einfacher Ausführung ergibt sich dann, wenn gemäss einer Weiterbildung der Erfindung das Brandschutzmittel intumeszierendes Material ist. Dieses Brandschutzmittel bläht sich im Brandfall aus und übernimmt die Dichtungsfunktion. Dieses Material dringt hierbei zwischen die Stirnseiten der Rohre und ergibt damit eine sehr hohe Dichtwirkung auch bei hochen Temperaturen. Solches intumeszierendes Material ist an sich bekannt.

Eine besonders kostengünstige Spannschelle ergibt sich dann, wenn gemäss seiner Weiterbildung der Erfindung das Brandschutzmaterial in das Dichtungsmittel eingearbeitet und insbesondere einextrudiert ist. Die Dichtung kann dann die übliche Form eines Dichtungsbandes aufweisen. Vorzugsweise ist das intumeszierende Material gleichmässig in der Dichtung verteilt. Sobald ein Bereich der Dichtung über eine bestimmte Temperatur erwärmt wird, wird das intumeszierende Material aktiv und bläht sich auf. Eine solche Dichtung kann sehr kostengünstig als Endlosprofil extrudiert werden.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: eine Ansicht einer erfindungsgemässen Spannschelle,
- Figur 2: ein Schnitt durch die Spannschelle entlang der Linie II-II der Figur 1,
- Figur 3: ein Schnitt durch eine Spannschelle gemäss einer Variante,
- Figur 4: ein Schnitt durch eine Spannschelle durch eine weitere Variante und
- Figur 5: eine Ansicht der Spannschelle gemäss Figur 4.

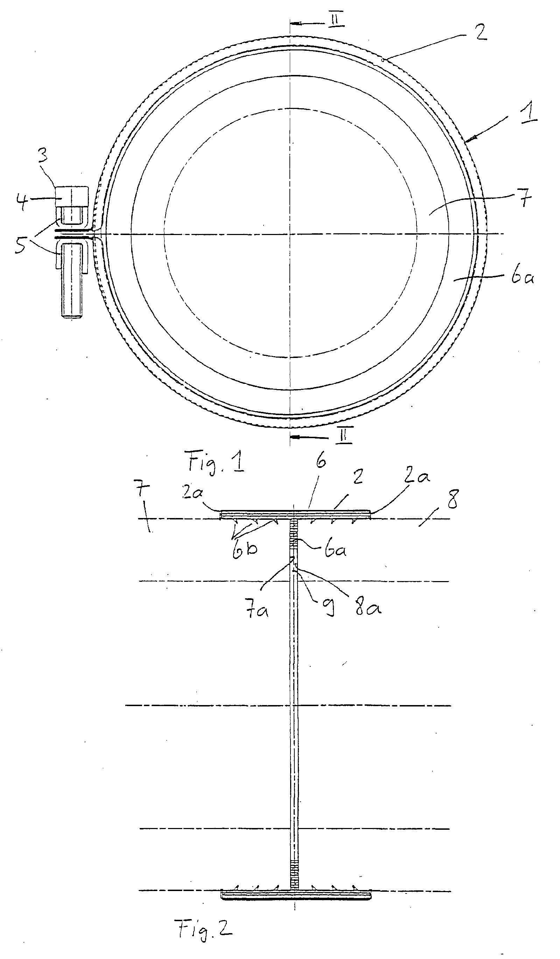

Die in Figuren 1 und 2 gezeigte Spannschelle 1 weist ein Gehäuse 2 auf, das vorzugsweise aus Blech hergestellt ist und das in an sich bekannter Weise ein Spannmittel 3 aufweist, das im wesentlichen aus zwei Spannbacken 5 sowie einer Spannschraube 4 besteht. Das Gehäuse 2 weist zwei abgebogene Ränder 2a auf, zwischen denen eine bandförmige Dichtung 6 angeordnet ist. Die Dichtung 6 ist wie das Gehäuse 2 offen und wird mit diesem um die zu verbindenden Enden zweier Rohre 7 und 8 gelegt. An der Innenseite der Dichtung 6 sind mehrere umlaufende Dichtlippen 6b angeformt, die an die Aussenseiten 7a und 8a der Rohre 7 und 8 angepresst werden und einen umlaufenden Zwischenraum 9 zwischen den beiden Rohren 7 und 8 nach aussen abdichten.

An der Dichtung 6 ist zudem ein ringförmiger Anschlag 6a angeformt, der radial nach innen ragt und an den Stirnseiten 7a und 8a der Rohre 7 und 8 anliegt.

Die Dichtung 6 besteht aus einem Material, das aus einer extrudierten Mischung aus einem gummielastischen Grundmaterial und einem intumeszierenden Material bzw. Blähmaterial besteht. Das Blähmaterial ist vorzugsweise homogen im gummielastischen Material verteilt, denkbar ist jedoch auch eine Ausführung, bei welcher das Blähmaterial ungleichmässig verteilt ist. Das Blähmaterial ist insbesondere handelsüblicher blähfähiger Grafit. Das Grundmaterial ist beispielsweise ein Elastomer oder PUR.

Wird die Spannschelle 1 im Brandfall beispielsweise auf etwa 180° erwärmt, so erweicht das Grundmaterial der Dichtung 6 und das Blähmaterial dehnt sich auf und füllt den Raum zwischen dem Gehäuse 2 und der Aussenseite der beiden Rohre 7 und 8 dichtend aus. Das Blähmaterial füllt zudem den Zwischenraum 9 zwischen den beiden Stirnflächen 7a und 8a. Das Blähmaterial erweicht sich auch bei sehr hohen Temperaturen nicht, so dass auch unter diesen hohen Temperaturen die Dichtigkeit gewährleistet ist. Die Montage der Spannschelle 1 ist einfach, da keine zusätzlichen Teile benötigt werden.

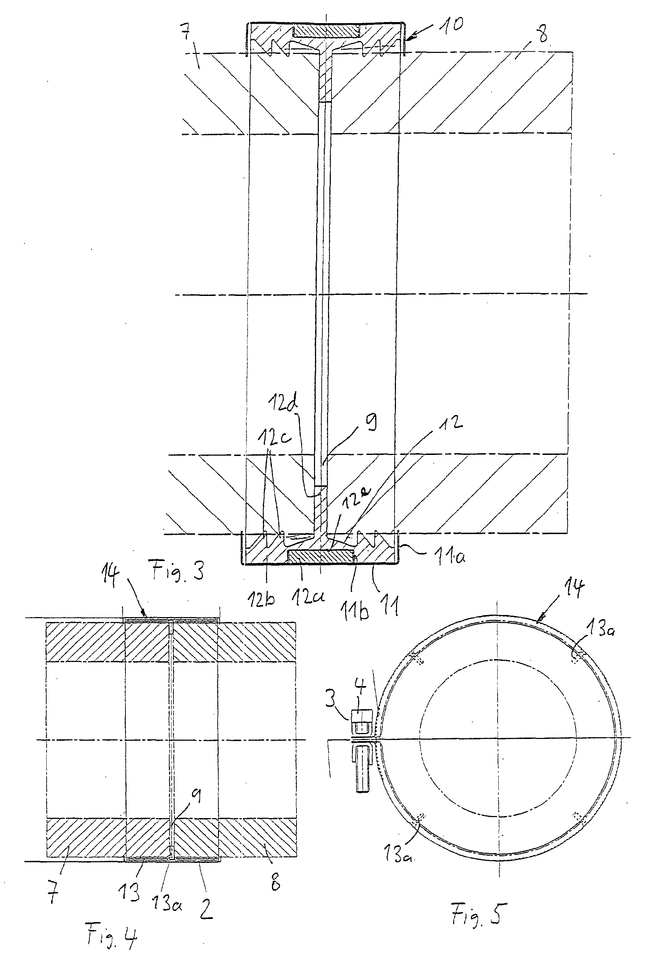

Die in Figur 3 gezeigte Spannschelle 10 weist ebenfalls eine Dichtung 12 auf, die bandförmig ausgebildet ist und in ein Gehäuse 11 eingelegt ist. Das Gehäuse 11 ist ebenfalls vorzugsweise aus Blech hergestellt und wird mit den in Figur 1 gezeigten Spannmitteln 3 gespannt. Die Dichtung 12 befindet sich zwischen um 90° umgebogenen Rändern 11a und weist radial nach innen gerichtete Dichtlippen 12c auf. Ein Grundkörper 12b der Dichtung 12 besteht aus gummielastischem Material und besitzt einen umlaufenden Anschlag 12d sowie aussenseitig eine Ausnehmung 12e, in die ein Band 12a aus intumeszierendem Material eingelegt ist. Dieses Band 12a kann seitlich durch radial vorspringende Wandungen 12b des Gehäuses 11 begrenzt sein. Im Brandfall dehnt sich bei einer vorbestimmten Temperatur das Band 12a aus und füllt den Innenraum des Gehäuses 11 und den Zwischenraum 9 zwischen den Stirnseiten der beiden Rohre 7 und 8. Die Wandungen 11b lenken das sich dehnende Material des Bandes 12a gegen den Zwischenraum 9. Das Band 12a kann mit dem Grundmaterial 12b fest verbunden sein. Denkbar ist auch eine Ausführung, bei welcher das Band 12a lose in die Ausnehmung 12e eingelegt ist.

Die Figuren 4 und 5 zeigen eine Spannschelle 14 die ein Gehäuse 2 aufweist, das mit demjenigen der Spannschelle 1 identisch sein kann. In das Gehäuse 2 ist eine Dichtung 13 eingelegt, die wie oben erläutert aus einem Grundmaterial sowie einem beigemischtem Blähmaterial besteht. Als Anschlag für die beiden Rohre 7 und 8 sind hier jedoch Bolzen 13a vorgesehen, die gemäss Figur 5 etwa gleichmässig um den Umfang der Spannschelle 14 verteilt sind. Diese Bolzen 13a ragen jeweils in den Zwischenraum 9 hinein und bilden einen Anschlag für die Rohre 7 und 8. Die Bolzen 13a füllen den Zwischenraum 9 nur punktförmig aus und im Brandfall kann das Blähmaterial neben dem Bolzen 13a in den Zwischenraum 9 eindringen und den Zwischenraum 9 abdichten. Die Abstandbolzen 13a können aus Kunststoff oder Metall bestehen und sind vorzugsweise an der Dichtung 13 befestigt.

## Patentansprüche

1. Spannschelle zum flüssigkeits- oder gasdichten und axialen Verbinden von zwei Rohren (7, 8), mit einem Gehäuse (2, 11), einem Spannmittel (3) zum Spannen des Gehäuses (2, 11), mit einem Dichtungsmittel (12b), das an der Innenseite des Gehäuses (2, 11) angeordnet ist und an die zu verbindenden Rohre (7, 8) anzulegen ist und mit einem Brandschutzmittel (12a) das innerhalb des Gehäuses (2, 11) angeordnet ist und im Brandfall eine Undichtigkeit der Verbindung verhindern soll, **dadurch gekennzeichnet, dass** das Brandschutzmittel (12a) in einer Dichtung (6, 12, 13) integriert ist.

2. Spannschelle nach Anspruch 1, **dadurch gekennzeichnet, dass** das Brandschutzmittel intumeszierendes Material ist.

3. Spannschelle nach Anspruch 1 oder 2, **dadurch gekennzeichnet, dass** das Brandschutzmittel in die Dichtung (6, 12, 13) einextrudiert ist.

4. Spannschelle nach einem der Ansprüche 1 bis 3, **dadurch gekennzeichnet, dass** die Dichtung (6, 13) ein Grundmaterial aus gummielastischen Material aufweist.

5. Spannschelle nach einem der Ansprüche 1 bis 4, **dadurch gekennzeichnet, dass** die Dichtung (6, 12, 13) bandförmig oder streifenförmig ausgebildet ist.

6. Spannschelle nach einem der Ansprüche 1 bis 5, **dadurch gekennzeichnet, dass** das Brandschutzmittel (12a) in eine Ausnehmung (12e) eines Bandes aus gummielastischem Material eingelegt ist.

7. Spannschelle nach einem der Ansprüche 1 bis 6, **dadurch gekennzeichnet, dass** die Dichtung (6, 12, 13) mit dem integrierten Brandschutzmittel als Endlosprofil extrudiert ist.

8. Spannschelle nach einem der Ansprüche 1 bis 6, **gekennzeichnet durch** Anschlagmittel (6a, 12d, 13a) die zwischen den beiden zu verbindenden Rohren (7, 8) anzuordnen sind.

9. Spannschelle nach Anspruch 7, **dadurch gekennzeichnet, dass** die Anschlagmittel (6a, 12d) an der Dichtung (6, 12) angeformt sind und intumeszierendes Material enthalten.

10. Spannschelle nach Anspruch 7, **dadurch gekennzeichnet, dass** die Anschlagmittel (13a) durch radial nach innen gerichtete Stifte (13a) gebildet sind.
